# EUROPEAN PATENT SPECIFICATION

(11) **EP 2 677 264 B1**
(45) Date of publication and mention of the grant of the patent: **17.10.2018**
(21) Application number: 13185003.4
(22) Date of filing: 11.07.2007
(51) Int. Cl.: F28F 9/26, F28D 1/02, F24D 3/16, F28F 1/02

(54) **Skirting radiator**
Sockelradiator
Radiateur plinthe

(30) Priority: 19.07.2006 GB 0614300
(43) Date of publication of application: 25.12.2013
(62) Divisional of application: 07766200.5
(73) Proprietor: The Discreteheat Company Limited, The Village Prestbury Cheshire SK10 4DG (GB)
(72) Inventor: Wadsworth, Martin, Prestbury, cheshire SK10 4AG (GB); Foster, Leslie Stephen, Blackburn, BB1 9DL (GB)
(74) Representative: Dauncey, Mark Peter

(56) References cited:
- EP-A- 0 662 547
- EP-A2- 1 512 915
- EP-B- 0 681 667
- DE-A1- 4 402 010
- DE-A1- 19 522 193
- FR-A- 2 456 908
- GB-A- 1 040 018
- NL-A- 9 201 981
- US-A- 3 194 306
- US-A- 4 766 951

## Description

The present invention relates to a radiator and more particularly to a space-heating skirting radiator that is fitted just above the floor and adjacent to the walls of a room.

Skirting radiators generally comprise one or more copper pipes that extend principally horizontally around the periphery of a room just above floor level and carry heated water. The pipes are fitted with heat-dissipating fins at intervals around the room and are enclosed behind a cover panel that is designed to have an appearance similar to a conventional skirting board.

The advantage of skirting radiators is that they do not occupy wall space like a conventional wall radiator thereby providing more flexibility in relation to the positioning of other furniture and fittings in the room.

It is important that skirting radiators are unobtrusive and complementary to the aesthetics of the room in which they are fitted.

EP 0542785 and EP 0681667 describe a skirting radiator system that comprises a plurality of interconnected elongate skirting panels for mounting on a wall just above floor level. Each panel has a front surface (room-facing) that is designed to have the appearance of a skirting board and has integral conduits formed on its rear (wall-facing) surface. The conduits are designed to carry the heated water around the room and ported connectors are provided between adjacent panels. The panels are supported on the wall by mounting brackets that are fixed to the wall and have a pair of projecting arms for inter-engagement with a complementary formation on the rear surface of the panel between the conduits.

Significant problems occur during installation of existing radiator systems at the corners of a room. In particular, after a first panel has been mounted to a first wall it is often difficult to install a second panel to an adjacent perpendicular second wall and connect it with the corner connectors without running the risk of damaging the connector seals or the walls of the room. What tends to happen is that the corner connectors are fitted into the conduits in the first panel and the second panel is presented to ends of those connectors at an angle to the second wall so that the far end of the panel does not interfere with a wall opposite the first wall. This often causes damage to the connectors, which are bent or strained, or to the seals provided on the connectors. Moreover, in operation the corner connectors can have a tendency to work loose under pressure.

It is an object of the present invention to provide for an improved radiator.

According to a first aspect of the present invention there is provided a skirting radiator according to claim 1.

The radiator is particularly suitable as a space-heating skirting radiator and its configuration enables it to have a shallow depth such that it does not protrude unduly into the space it is heating and thus resembles a conventional skirting board.

An external surface of the conduit facing away from the panel may be substantially flat for abutment against a wall.

There may be an elongate upper member releasably connected to the upper edge of the panel, the upper member have a rearwardly directed element for bridging a clearance between the wall and the panel. The upper member may be received in a channel defined in the upper edge of the panel. The rearwardly directed element may be flexible. The upper member may comprise an upwardly directed web having an edge for receipt in the channel in the upper edge of the panel, the web being connected to the rearwardly directed element. The web may be integrally formed with the rearwardly directed member. The edge of the web may be received in the channel in a snap-fit connection.

The upper member may be a caulking seal.

There may be a depending skirt releasably connected to the lower edge of the panel. A channel may be formed in the lower edge of the panel for receipt of an edge of the depending skirt. The depending skirt may have an outwardly facing surface, which may be substantially contiguous with the first surface of the panel when the skirt is received in the channel. The edge of the skirt may be received in the channel in a snap-fit connection.

There may be a plurality of interconnected panels, connection being provided by a ported connector. The connector may have two spigots, one for connecting with a conduit of one panel and the other for connection to a conduit of an adjacent panel. The spigots may be designed to be received in the conduits and may have sealing members mounted thereon. The connector may have fixing lugs for fixing to the wall.

There may be provided two parallel conduits on each panel, the conduits being vertically spaced. A mounting bracket may be received between the two conduits. The mounting bracket may comprise at least one arm defining a formation for receipt in a complementary formation on an outer surface of a conduit. The mounting bracket may be a snap-fit connection with the panel.

The elongate upper member is conveniently designed to close any gaps between the panel and the surface of the wall to which it is mounted. It may be in the form of caulking strip with a rearwardly projecting web for closing the gap and an upwardly directed web for connection to the upper edge of the panel.

A depending skirt releasably connected to the lower edge of the panel conveniently takes up any clearance between the lower edge of the panel and the floor and may be cut to size. It also serves to conceal any cables or the like that are located below the lower edge of the panel.

Specific embodiments of the present invention will now be described, by way of example only, with reference to the accompanying drawings in which:
Figure 1 is a schematic, exploded, front perspective view of two panels of a radiator of the present invention;
Figure 2 is a schematic, exploded, rear perspective view of one of the panels of the radiator of figure 1, illustrated with a mounting bracket, connectors and other fittings;
Figure 3 is an exploded perspective view of two panels of the radiator of the present invention, illustrating the connection at a corner location;
Figure 4 is an end view of a panel of the radiator of figure 1, shown with a mounting bracket;
Figure 5 is an end view of the panel of figure 4;
Figure 6 is an exploded perspective view illustrating a first end panel and connectors in a radiator system;
Figure 7 is an exploded perspective view illustrating a second end panel and connectors in a radiator system;
Figure 8 is a perspective view of a corner connector for interconnecting two panels of a radiator at a corner;
Figures 9, 10 and 11 are front, end and side views respectively of a retaining clip for the corner connector of figure 8;
Figure 12 is a perspective view, partially exploded, illustrating the interconnection of two panels with two corner connectors of figure 8 and two retaining clips of figures 9 to 11;
Figure 13 is a perspective view of an alternative embodiment of a corner connector in accordance with one aspect of the present invention;
Figure 14 is a diagrammatic perspective representation of a room partially fitted with a radiator of the present invention using the connector of figure 13; and
Figures 15A-C are diagrammatic representations in plan view of a radiator system being installed in a room with four walls.

Referring now to the drawings, the radiator space heating system comprises a plurality of interconnected elongate skirting panels 10 that are mounted on a wall just above floor level in a modular fashion. Each panel has an outward room-facing surface 11 and an inward wall-facing surface 12, the panel appearance being designed to be similar to that of a conventional skirting board.

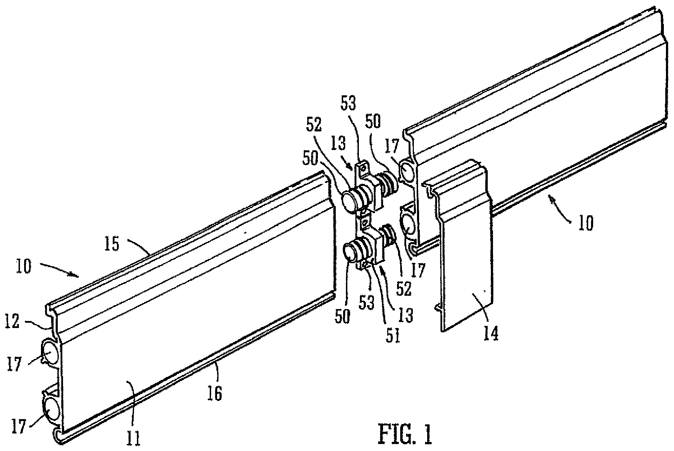

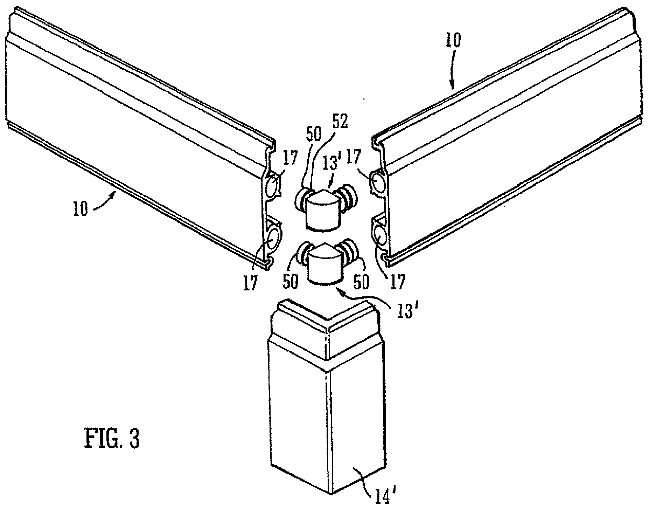

Figure 1 shows two such panels 10 that are to be connected together in a straight line by two ported connectors 13. A narrow cover plate 14 is used to cover the gap between the panels 10 once they are connected together. Similarly, the arrangement in figure 3 shows two panels 10 and connectors 13' designed for use around an external corner of a wall. Again there is a narrow cover (corner) plate 14' for covering the clearance between the panels.

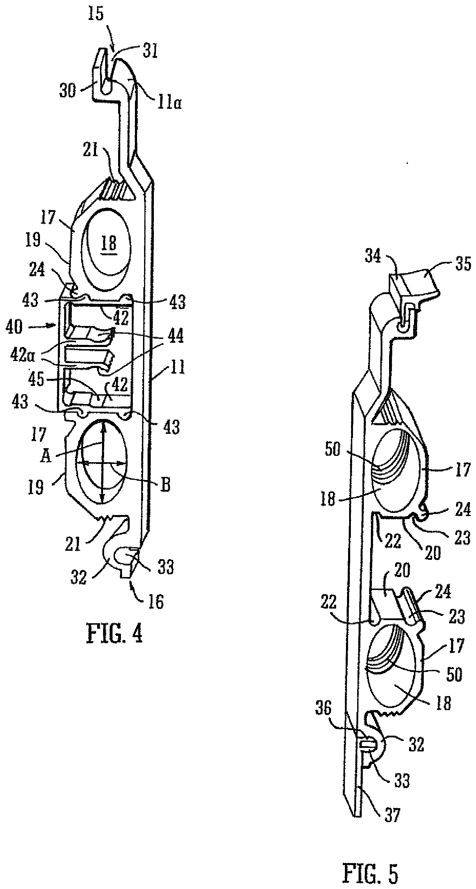

Each panel 10 is extruded in thin sheet metal or a composite alloy polymer, has upper and lower edges 15, 16 and a pair of parallel conduits 17 integrally formed on the rear wall-facing surface 12. The conduits 17 extend horizontally along the full length of each panel 10 and are vertically spaced and are designed such that, in use, they circulate heated water delivered from a suitable supply around the room. As best seen in figures 4 and 5, the internal bore 18 of the conduit is defined by a substantially elliptical cross-section with its major axis, A, extending parallel to the wall and the predominant part of the outward facing surface 11 of the panel, and a minor axis, B, extending in a direction perpendicular to the major axis. The height of the bore (the major axis of the ellipse) is greater than its depth (the minor axis of the ellipse).

Externally, the conduits 17 each have a first flat surface 19 that faces the wall, a second flat surface 20 that faces the corresponding surface 20 on the other conduit and a ribbed surface 21 opposite said second flat surface 20. The depth of the conduit is narrower than its height and is designed to be as shallow as possible to ensure that the skirting panels 10 do not protrude from the wall so as to be visually obtrusive.

The second flat surface 20 of each conduit 19 has two spaced grooves defined therein along its length, a first one 22 adjacent to the wall of the panel and a second one 23 distal therefrom. Immediately adjacent to the second groove 23 there is a parallel protruding lug 24.

The upper edge 15 of the panel 10 terminates in an upwardly extending flange 30 that is substantially parallel to the room-facing surface 11. An upper channel 31 is defined in the upper edge 15 by a recess between the flange and the surface 11. The upper part 11a of the surface 11 is curved rearwardly towards the upper edge 15. At the lower edge 12, the panel 10 has an inwardly curved portion 32 that defines an elongate, outwardly facing lower channel 33 extending in parallel to the conduit bores 18.

The upper channel 31 is configured to receive an elongate caulking strip 34 (see figure 5) that seals against the wall to which the panel is connected. The extrusion 34 has first and second webs that are co-extruded and disposed approximately at right angles. The first web is upstanding and relatively rigid with a lower edge that is received in the upper channel 31 in a snap-fit connection (other connection arrangements are contemplated). The second web is a laterally extending flexible tongue 35 that takes up any clearance between the top edge 15 of the panel 10 and the wall. The strip is not only designed to eliminate gaps between the wall and the top edge of the panel but can be removed during decoration of the wall and replaced afterwards thereby eliminating the need to mask the skirting panel for painting or to cut wallpaper with precision.

The lower channel 33 is designed to receive a connecting lug 36 on a depending skirt 37 (see figure 5) with a snap-fit connection, although other connection arrangements are contemplated. The depending skirt 37 is substantially planar, rigid and extends under the length of the panel with an outwardly facing surface that is substantially co-planar and contiguous with the surface 11 of the panel. This component serves to take up any clearance between the bottom of the panel and the floor and can be cut to size during fitting to account for any variations in the clearance along the length of the panel (it may be pre-scored on its inwardly facing surface for this purpose). It is thus able to accommodate varying thicknesses of flooring (e.g. carpet or laminate panels) with a neat finish. It may serve as a cable cover to conceal electrical cables or the like that are run along the floor under the radiator conduits 17.

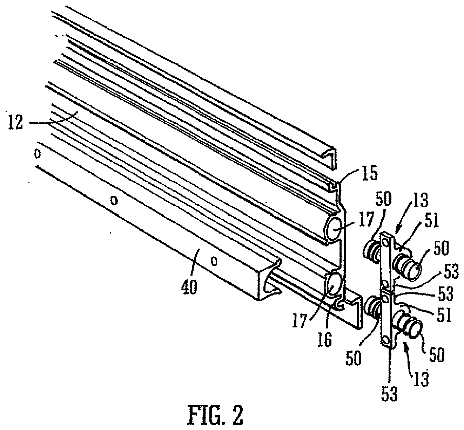

In use, the panel is mounted on the wall by a mounting bracket 40 (shown schematically in figure 2 and in more detail in figure 4). The bracket essentially comprises a back plate 41 that abuts the wall and has fixing apertures therethrough to enable it to be fixed to the wall and perpendicular, laterally extending, vertically spaced arms 42 that have protrusions 43 designed to engage in the grooves 22, 23 defined in the second flat surfaces 20 of the conduits 17 as shown in figure 4. Two legs 42a (see figure 4) extend in parallel between the two arms 42 and have arcuate recesses 44 that face corresponding recesses 45 formed in the arms 42. The space defined between each pair of facing recesses 44, 45 can accommodate additional pipework that may be required in certain applications. During installation of the bracket 40, the facing arms 42 and legs 42a may also conveniently serve to grip the heads of fixing screws as they are inserted into the back plate 41 and wall.

Adjacent panels 10 are interconnected at the conduits 17 by specially adapted ported connectors 13, 13' such that the panels are contiguous and the outward facing surfaces thereof are substantially coplanar. The connectors 13, 13', which ensure fluid communication between the interconnected conduits 17, comprise a pair of oval spigots 50 each having an outer surface that is complementary to the inside surface of the conduit 17, separated by an integral block which, in the case of the connectors of figures 1 and 2, is an integral mounting block 51. Each of the spigots 50 has a pair of annular grooves that receive O-ring seals 52. The mounting block 51 has a pair of laterally extending lugs 53 with fixing apertures by which it can be fixed to the wall, if necessary. The spigots 50 are co-axial if the connectors are designed to interconnect co-planar panels. Alternatively, as in the embodiment of figure 3, elbow connectors 13' have spigots 50 that are disposed at right angles to each other when designed for use at a corner wall section.

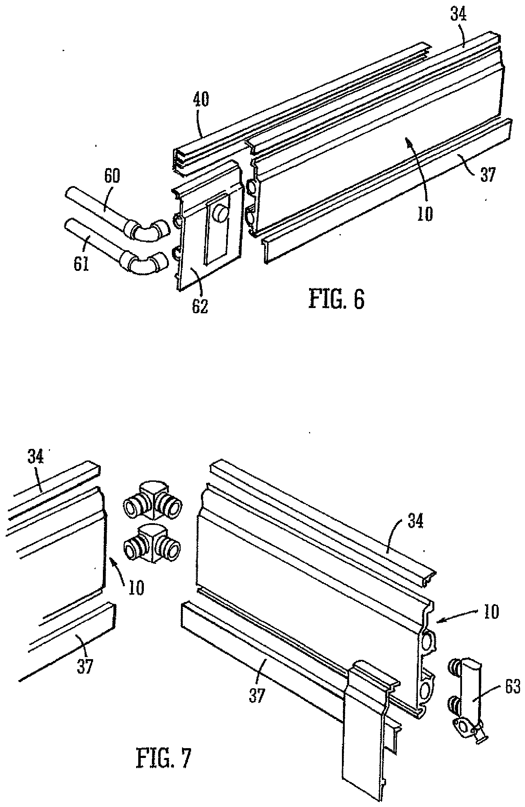

At the start of the run of the radiator systems the connectors 13, 13' are specially adapted to connect the conduits 17 to the supply and return pipes 60, 61 of the heating system via a thermostatic valve unit 62, as is illustrated in figure 6. At the end of the run the conduits 17 are interconnected by an end U-connector 63 as shown in figure 7.

All the components are push-fit for ease of installation. No special tools or soldering is required.

In operation, heated water is delivered to one of the conduits 17 and passes through the spigots of the connectors 13, 13' as it is transported between panels 10. The water heats the conduits 17 and panels 10 and this heat passes by conduction and convection to the outward facing surface of the panel from where the heat radiates into the room. It is returned to the other of the conduits via the end U-connector 63 and returned to the return pipe 61.

The ribbed surface 21 is designed to connect with a complementary surface on an alternative mounting bracket (not shown).

The outwardly facing surface 11 of the panels 10 may be painted or coated on a stain resistant epoxy powder coating.

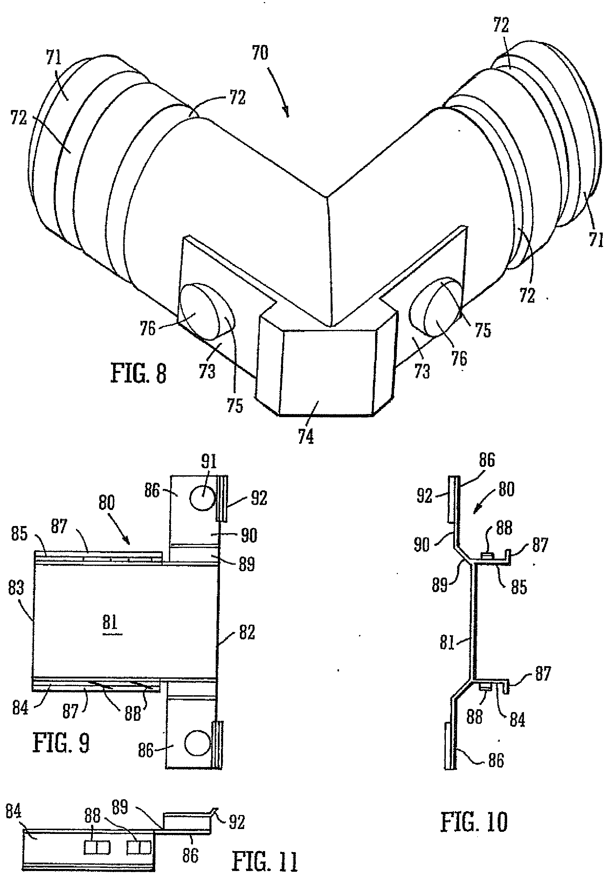

Referring now to figures 8 to 12, the components at a corner section of the radiator heating system are shown in more detail. The adjacent panels are interconnected by elbow corner connectors 70, one of which is shown most clearly in figure 8, and comprises perpendicularly extending spigots 71 for receipt in the conduits 17. Each spigot has a pair of annular recesses 72 defined on its outer surface towards its end, the grooves 72 being designed for the receipt of the O-ring seals. At the outwardly facing surfaces of the elbow (facing the panels) there is a raised flat surface 73 on each spigot 71, the flat surfaces being separated by an integral corner block 74. A cylindrical peg 75 with a ramped end surface 76 projects from each flat surface 73 that is designed to interface with a retaining clip that is shown in figures 9 to 12.

The retaining clip 80 is a rigid plate that is stamped or bent from a single piece of material. It comprises a main planar body 81 defining first and second ends 82, 83 and having integral first and second side walls 84, 85 and a pair of integral, outwardly extending wings 86. Each side wall 84, 85 extends in a direction perpendicular from the main body 81, terminates in an outwardly turned lip 87 and has a pair of longitudinally spaced cut-out prongs 88 formed therein. The wings 86 are formed at the first end 82 of the main body and each comprises an intermediate web 89 that is inclined to the main body 81 and a terminal web 90 that extends in parallel to the main body. Each terminal web 90 is penetrated by a circular aperture 91 and has a ramped lip 92 extending from a side edge.

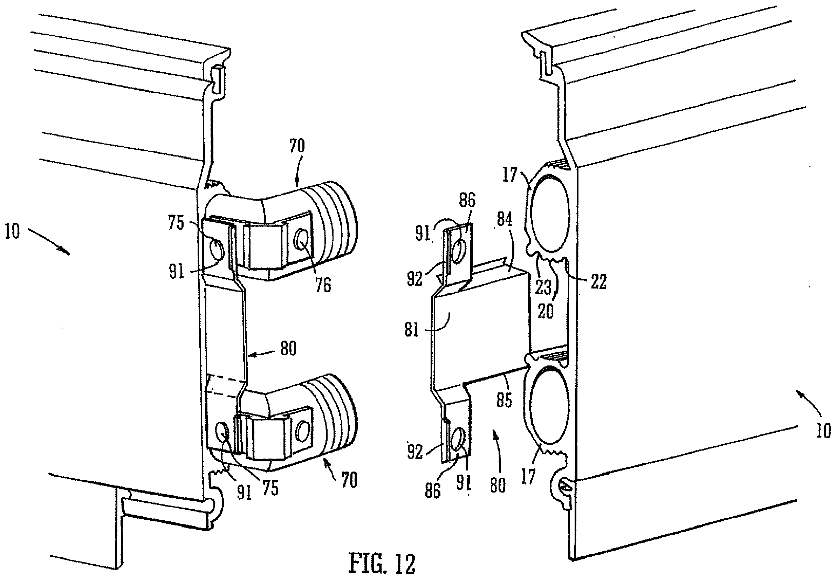

Referring to figure 12, on the left there is shown a retainer clip 80 that is fully is inserted into one end of the panel 10 such that the majority of its main body 81 occupies the space between the conduits 17. On the right the clip 80 is shown as being presented to the panel. The mounting bracket 40 (not shown in this figure) is designed to be shorter in length compared to the panel so that it does not interfere with the retaining clip. The side walls 84, 85 of the clip are spaced by a distance such that, when in place, they abut the second flat surface 20 of the external wall of the conduit 17 and that the prongs 88 dig into the surface 20 thereby preventing relative movement along the length of the panel 10. When the clip is fully inserted the wings 86 abut the end edges of the panel and project longitudinally therefrom as can be see in the left hand part of figure 12. The elbow connectors 70 (with O-rings fitted into the annular grooves 72) are then presented to the conduits 17 and pushed home. In the process of inserting the connector 70, the ramped lips 92 provide a lead in surface for the ramped surfaces 76 of the pegs 75, the surfaces 76 riding over the lips 92 and deflecting the wings 86 outwardly until they are brought into register with the apertures 91 whereupon the pegs 75 snap into the apertures and the wings 86 retract. The same process is repeated on the end of the adjacent panel. The locking of the pegs 75 in the apertures 91 serves to retain the connectors 70 in the conduits 17 so that they are not forced out under water pressure. When it is necessary to dismantle the system (e.g. for service or repair) the wings 86 are simply pulled back to release the pegs 75 from the apertures 91 thereby allowing the connectors to be removed from the conduits 17. The exposed area between the panels 10 may then be concealed by a corner panel 14' such as that shown in figure 3.

It is to be appreciated that the clips 80 may be used to retain connectors 13 between adjacent panels 10 arranged in a straight line as well as those 70 that are configured for interconnecting panels at corners.

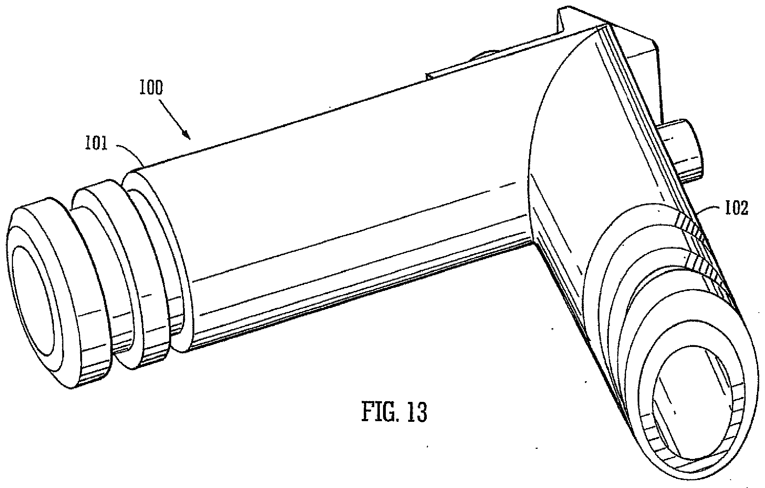

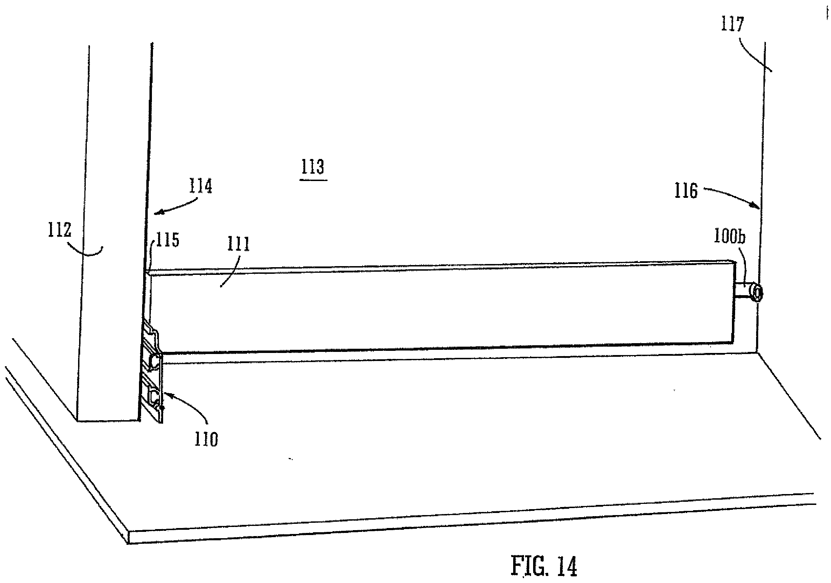

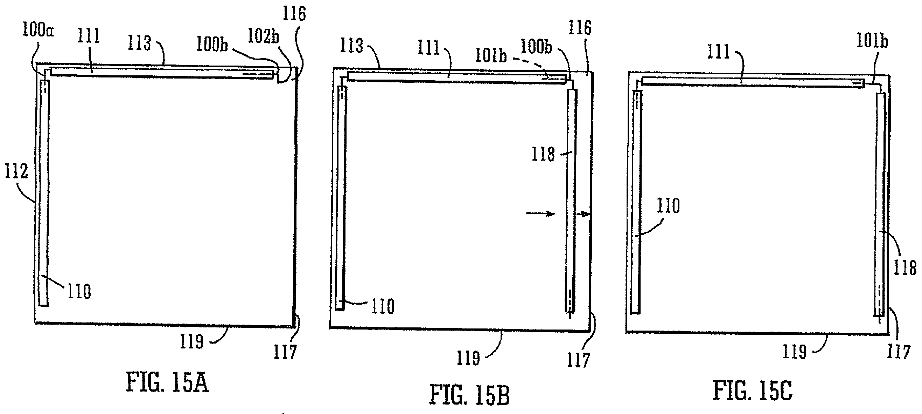

In figure 13 there is illustrated an alternative version of a ported corner connector 100. In this connector embodiment one spigot 101 is longer than the other 102 but otherwise corresponds to the connector described above in relation to figure 8. The benefit of the connector 100 will be apparent from the following description relating to installation of a radiator system in a room, with reference to the diagrammatic illustrations of figure 14 and 15A-C.

The room illustrated in figure 14 is shown partially cut away to show the radiator system which has been partially installed with two adjacent panels 110, 111 fitted to respective perpendicular walls 112, 113 and interconnected at a first internal corner 114, which is hidden, although an edge of a corner cover plate 115 can just be seen. The next step in the installation is to connect a third panel (not shown) to the end of the second panel 111 at a second internal corner 116 and mount it to wall 117, which is perpendicular to wall 113 and parallel to wall 112.

The second panel 111 is shown in figure 14 with one corner connector 100b fitted at the corner 116. The long spigot 101 is inserted into an upper conduit 17 so that the perpendicular short spigot 102 is ready to receive the third panel. A second corner connector 100b will be inserted in the same manner in the second conduit. The subsequent installation process will now be described with reference to figures 15A-C. Only the walls, the panels and the connectors are shown: the corner cover panels, mounting brackets and retaining clips having been removed for clarity.

Figure 15A reflects the position shown in figure 14 with adjacent panels 110, 111 being mounted to walls 112, 113 respectively and interconnected by corner connectors 100a. At the other free end of the panel 111, corner connectors 100b are fitted with the short spigot 102b exposed and the long spigot 101b pushed fully home in the conduits of the panel 111. After at least one mounting bracket 40, such as that shown in figure 4, has been fixed to wall 117, a third panel 118 for connection to wall 117 is cut from a length and presented to the connectors 100b at free end of the second panel 111. The panel length is cut so that it can be presented to the tips of the connectors 100b perpendicularly to the second panel 111 without interfering with the far wall 119. It can then be pushed on to the short spigots 102b to take up the position shown in figure 15B. In this position the panel 118 is spaced from the wall 117 and it is simply necessary to push it towards the wall 117 as indicated by the arrows in figure 15B so that it engages the mounting bracket. This serves to pull the long spigots 101b such that they are partially withdrawn from their respective conduits 17 to an extended position (in which the O-ring seals still maintain the sealed connection between the connectors 100b and panels 111, 118) as illustrated in figure 15C. A third pair of connectors 100c are provided in the end of the third panel 118 ready for receipt of the final panel (not shown). By working around the room in a clockwise or anticlockwise direction, the same process can be repeated and without bending or straining the connectors 100. Internal corner cover panels (the inverse of that shown at reference numeral 14' in figure 3) are then cut to the appropriate size and fitted to cover the exposed connectors 100 and to ensure that the room-facing surface of the radiator system is contiguous.

It will be appreciated in the above embodiment that the retaining clips are not fitted to the long spigots 102b of the connectors until the respective panel has been pushed back into place on to the respective mounting bracket.

It will be appreciated that the elbow connector configuration described above renders the installation process much easier and eliminates the risk of compromising the connectors and their seals during installation.

It is to be understood that although the radiator systems is described as being mounted on to a supporting wall, the panels can also be disposed under fitted furniture or units in the manner of a plinth.

It will be appreciated that numerous modifications to the above described design may be made without departing from the scope of the invention as defined in the appended claims.

## Claims

1. A skirting radiator comprising an elongate panel (10) for mounting on a wall, the panel (10) having a longitudinal axis, an elongate upper edge (15), a substantially parallel elongate lower edge (16), a first surface (11) for facing away from the wall and an opposed second surface (12) for facing said wall, at least one longitudinally extending conduit (17) adjacent to the second surface (12) and for carrying heating fluid, the conduit (17) having a depth defined by the distance by which it extends rearwardly from the panel (10) and a height being substantially perpendicular to the depth, wherein the conduit (17) is integrally formed with the panel (10),
**characterised in that** the depth of the conduit (17) is less than its height, and **in that** the conduit (17) defines an internal bore that is substantially elliptical in cross-section.

2. A radiator according to claim 1, wherein a major axis (A) of the bore extends in a direction between the upper and lower edges (15, 16) of the panel (10) and a minor axis (B) extends rearwardly from the panel (10).

3. A radiator according to claim 2, wherein the major axis (A) of the bore is substantially perpendicular to the upper and lower edges (15, 16).

4. A radiator according to any preceding claim, wherein an external surface of the conduit (17) that faces away from the panel is substantially flat.

5. A radiator according to any preceding claim, comprising a plurality of interconnected panels (10), the panels being interconnected by at least one ported connector (13, 13') with two spigots (50), a first spigot (50) for connection with a conduit (17) of one panel (10) and a second spigot (50) for connection to a conduit (17) of an adjacent panel (10).

6. A radiator according to claim 5, wherein the spigots (50) are configured to be received in the conduits (17).

7. A radiator according to claim 6, wherein the spigots (50) have annular sealing members (52) mounted thereon.

8. A radiator according to any one of claims 5 to 7, wherein the connector (13, 13') has fixing lugs (53) for fixing it to the wall.

9. A radiator according to any one of claims 5 to 8, wherein the connector (13, 13') is an elbow connector (13') with the first and second spigots (50) being substantially perpendicular to one another and the first spigot (50) is longer than the second spigot (50).

10. A radiator according to any one of claims 5 to 9, wherein there are two conduits (17) on each panel (10), the conduits(17) being vertically spaced.

11. A radiator according to claim 10, wherein the conduits (17) are substantially parallel.

12. A radiator according to claim 10 or 11, wherein a mounting bracket (40) is received between two conduits (17).

## Patentansprüche

1. Sockelradiator, der eine längliche Platte (10) für das Montieren an einer Wand umfasst, wobei die Platte (10) eine Längsachse, einen länglichen oberen Rand (15), einen im Wesentlichen parallelen unteren Rand (16), eine erste Fläche (11), die von der Wand weg liegt, und eine gegenüberliegende zweite Fläche (12), die zur Wand hin liegt, mindestens eine sich in Längsrichtung erstreckende Leitung (17) benachbart der zweiten Fläche (12) und für das Transportieren von Heizfluid umfasst, wobei die Leitung (17) eine Tiefe, die durch die Strecke definiert wird, um die sie sich von der Platte (10) nach hinten erstreckt, und eine Höhe, die im Wesentlichen senkrecht zur Tiefe ist, aufweist, wobei die Leitung (17) zusammenhängend mit der Platte (10) ausgebildet ist,
**dadurch gekennzeichnet, dass** die Tiefe der Leitung (17) geringer ist als ihre Höhe, und dadurch, dass die Leitung (17) eine innere Bohrung definiert, die im Querschnitt im Wesentlichen elliptisch ist.

2. Radiator nach Anspruch 1, wobei sich eine Hauptachse (A) der Bohrung in einer Richtung zwischen dem oberen und dem unteren Rand (15, 16) der Platte (10) erstreckt und sich eine Nebenachse (B) von der Platte (10) nach hinten erstreckt.

3. Radiator nach Anspruch 2, wobei die Hauptachse (A) der Bohrung im Wesentlichen senkrecht zu dem oberen und dem unteren Rand (15, 16) ist.

4. Radiator nach einem der vorhergehenden Ansprüche, wobei eine Außenfläche der Leitung (17), die von der Platte weg liegt, im Wesentlichen flach ist.

5. Radiator nach einem der vorhergehenden Ansprüche, die eine Vielzahl von miteinander verbundenen Platten (10) umfasst, wobei die Platten durch mindestens ein Anschluss-Verbindungsstück (13, 13') mit zwei Zapfen (50), einem ersten Zapfen (50) für die Verbindung mit einer Leitung (17) einer Platte (10) und einem zweiten Zapfen (50) für die Verbindung mit einer Leitung (17) einer benachbarten Platte (10), miteinander verbunden sind.

6. Radiator nach Anspruch 5, wobei die Zapfen (50) dafür konfiguriert sind, in den Leitungen (17) aufgenommen zu werden.

7. Radiator nach Anspruch 6, wobei die Zapfen (50) ringförmige Dichtungselemente (52) aufweisen, die an denselben montiert sind.

8. Radiator nach einem der Ansprüche 5 bis 7, wobei das Verbindungsstück (13, 13') Befestigungsansätze (53) für dessen Befestigung an der Wand aufweist.

9. Radiator nach einem der Ansprüche 5 bis 8, wobei das Verbindungsstück (13, 13') ein Knieverbindungsstück (13') ist, wobei der erste und der zweite Zapfen (50) im Wesentlichen senkrecht zueinander sind und der erste Zapfen (50) länger ist als der zweite Zapfen (50).

10. Radiator nach einem der Ansprüche 5 bis 9, wobei es zwei Leitungen (17) an jeder Platte (10) gibt, wobei die Leitungen (17) in Vertikalrichtung beabstandet sind.

11. Radiator nach Anspruch 10, wobei die Leitungen (17) im Wesentlichen parallel sind.

12. Radiator nach Anspruch 10 oder 11, wobei eine Montagehalterung (40) zwischen zwei Leitungen (17) aufgenommen wird.

## Revendications

1. Radiateur plinthe comprenant un panneau allongé (10) destiné à être monté sur un mur, le panneau (10) ayant un axe longitudinal, un bord supérieur allongé (15), un bord inférieur allongé (16) sensiblement parallèle, une première surface (11) destinée à être tournée du côté opposé au mur et une seconde surface opposée (12) destinée à être tournée du côté dudit mur, au moins un conduit (17) s'étendant longitudinalement, adjacent à la seconde surface (12) et destiné à transporter un fluide chauffant, le conduit (17) ayant une profondeur définie par la distance à laquelle il s'étend à l'arrière du panneau (10) et une hauteur sensiblement perpendiculaire à la profondeur, le conduit (17) étant formé d'un seul tenant avec le panneau (10),
**caractérisé en ce que** la profondeur du conduit (17) est inférieure à sa hauteur, et **en ce que** le conduit (17) définit un alésage interne qui a une section sensiblement elliptique.

2. Radiateur selon la revendication 1, dans lequel un grand axe (A) de l'alésage s'étend dans une direction entre les bords supérieur et inférieur (15, 16) du panneau (10) et un petit axe (B) s'étend vers l'arrière du panneau (10).

3. Radiateur selon la revendication 2, dans lequel le grand axe (A) de l'alésage est sensiblement perpendiculaire aux bords supérieur et inférieur (15, 16).

4. Radiateur selon l'une quelconque des revendications précédentes, dans lequel une surface extérieure du conduit (17) tournée du côté opposé au panneau est sensiblement plate.

5. Radiateur selon l'une quelconque des revendications précédentes, comprenant une pluralité de panneaux interconnectés (10), les panneaux étant interconnectés par au moins un raccord avec orifice (13, 13') pourvu de deux bouts mâles (50), un premier bout mâle (50) destiné à être raccordé à un conduit (17) d'un panneau (10) et un second bout mâle (50) destiné à être raccordé à un conduit (17) d'un panneau adjacent (10).

6. Radiateur selon la revendication 5, dans lequel les bouts mâles (50) sont conçus pour être reçus dans les conduits (17).

7. Radiateur selon la revendication 6, dans lequel les bouts mâles (50) possèdent des éléments d'étanchéité annulaires (52) montés sur ceux-ci.

8. Radiateur selon l'une quelconque des revendications 5 à 7, dans lequel le raccord (13, 13') est pourvu de pattes de fixation (53) pour le fixer au mur.

9. Radiateur selon l'une quelconque des revendications 5 à 8, dans lequel le raccord (13, 13') est un raccord coudé (13'), les premier et second bouts mâles (50) étant sensiblement perpendiculaires l'un à l'autre et le premier bout mâle (50) étant plus long que le second bout mâle (50).

10. Radiateur selon l'une quelconque des revendications 5 à 9, dans lequel il y a deux conduits (17) sur chaque panneau (10), les conduits (17) étant verticalement espacés.

11. Radiateur selon la revendication 10, dans lequel les conduits (17) sont sensiblement parallèles.

12. Radiateur selon la revendication 10 ou 11, dans lequel un support de fixation (40) est reçu entre deux conduits (17).
